# EUROPÄISCHE PATENTSCHRIFT

(11) **EP 1 432 749 B1**
(45) Veröffentlichungstag und Bekanntmachung des Hinweises auf die Patenterteilung: **05.12.2007**
(21) Anmeldenummer: 02797592.9
(22) Anmeldetag: 19.08.2002
(51) Int. Cl.: C08G 18/16, C08G 18/22

(54) **VERFAHREN ZUR HERSTELLUNG VON POLYURETHANELASTOMEREN UND VERWENDUNG**
METHOD FOR THE PRODUCTION OF POLYURETHANE ELASTOMERS AND USE
PROCEDE DE FABRICATION D' ELASTOMERES DE POLYURETHANNE ET UTILISATION

(30) Priorität: 29.08.2001 DE 10142296
(43) Veröffentlichungstag der Anmeldung: 30.06.2004
(73) Patentinhaber: Bayer MaterialScience AG, 51368 Leverkusen (DE)
(72) Erfinder: BRECHT, Klaus, 51399 Burscheid (DE); GRIMM, Wolfgang, 51381 Leverkusen (DE); SCHLEIERMACHER, Stephan, 41539 Dormagen (DE); SCHÜTZE, Marc, 40597 Düsseldorf (DE)
(86) Internationale Anmeldenummer: PCT/EP2002/009244
(87) Internationale Veröffentlichungsnummer: WO 2003/020783

(56) Entgegenhaltungen:
- EP-A- 0 603 597
- WO-A-98/15585
- DE-A- 4 104 199
- US-A- 3 714 077
- US-B1- 6 187 859

## Beschreibung

Gegenstand der Erfindung ist ein Verfahren zur Herstellung von Polyurethanelastomeren (PUR-Elastomeren) unter Verwendung von speziellen Katalysatormischungen und die Verwendung der so hergestellten Polyurethane insbesondere zur Herstellung von Schuhsohlen.

PUR-Elastomere sind lange bekannt und wurden bereits für unterschiedlichste Anforderungen maßgeschneidert entwickelt (US-A 5 952 053). Um ihre Polymerisationsgeschwindigkeiten zu kontrollieren, wurde bereits eine große Anzahl verschiedenster Metallkatalysatoren untersucht und eingesetzt. Neben den verbreiteten Organozinn-Verbindungen gehören hierzu auch Organoverbindungen bzw. organische Salze verschiedener anderer Elemente wie z.B. Lithium, Titan und Bismut.

Der Einsatz von Lithiumsalzen organischer Säuren wird vereinzelt beschrieben. Gemische aus einem Lithiumcarboxylat, namentlich Lithiumneodecanoat, Lithiumoctanoat, Lithiumstearat oder Lithiumnaphthenat, und einem Zinkcarboxylat werden z.B. in US-A 4 256 847 als effektive Katalysatorkombination für Hartschaumanwendungen beschrieben. Hierbei wird Lithium eine hohe Aktivität zugesprochen. Weitere Patente führen Lithium als alleinigen Metallkatalysator zur Katalyse von PUR-Reaktionen auf. In US-A 4 107 069 werden Lithiumcarboxylate als lagerstabile Gelkatalysatoren für PUR-Hartschäume eingesetzt. US-A 3 108 975 nutzt sie als Katalysatoren für harte und weiche sowie für zellige und zellfreie Polyurethane. Der Einsatz der Lithiumcarboxylate als Trimerisierungskatalysator ist ebenso verbreitet und zwar nutzt man in US-A 3 634 345 die gegen Feuchtigkeit unempfindlichen, gut löslichen aromatischen Carboxylate zur PUR-Harzherstellung, in US-A 3 940 517 setzt man für PUR-Schäume aliphatische Lithiumcarboxylate ein und in US-A 6 127 308 sowie in US-A 5 955 609 nutzt man die gute Kontrollierbarkeit der Trimerisierungsreaktion für PUR-Schäume und die Prepolymersynthese. Ebenso verfährt man bei der Herstellung von Hartschäumen in DE-A 59 101 001. Schließlich werden in US-A 2 894 919 Lithiumcarboxylate, namentlich Lithiumstearat und Lithiumcaprylat, als Katalysatoren eingesetzt, um ausschließlich elastische, weiche PUR-Schäume herzustellen.

Organische Titanverbindungen werden bereits seit den sechziger Jahren als Katalysatoren zur Synthese von Polyurethanen eingesetzt, wie z.B. in US-A 5 902 835 aufgeführt. Im wesentlichen handelt es sich um Titancarboxylate (US-A 5 162 382), Alkyltitanate (Saunders, J.H.; Frisch, K.C. *Polyurethanes - Chemistry and Technology* (1962) London Part I p.168, JP 2 001/026 629, JP 5 097 952) und Titan-diketonate sowie Titan-β-ketoester (US-A 5 902 835, DE-A 19 626 007, WO 98/15585, Chemical Abstract, Vol. 108:56652). Sie werden als Treib- und Gelkatalysatoren eingesetzt. Ihr Anwendungsgebiet reicht von wassergetriebenen PUR-Schäumen und mechanisch aufgeschlagenen, thermisch aushärtbaren PUR-Schäumen über PUR-Oberflächenbeschichtungen bis hin zu RIM-Systemen für flexible PUR-Schäume.

Aus der Gruppe der organischen Bismutverbindungen werden mit Ausnahmen (wie z.B. Luo, S.-G.; Tan, H.-M.; Zhang, J.-G.; Wu, Y.-J.; Pei, F.-K.; Meng, X.-H. J. Appl. Polym. Sci. (1997) 65(6), S.1217-1225) vorwiegend Carboxylate (CA-A 2 049 695, DE-A 19 618 825, US-A 5 792 811, WO 2000/47642) eingesetzt. Darüber hinaus verwendet man als Latenzkatalysatoren Bismutorganothiolate (WO 95/29007, US-A 5 910 373, US-A 6 190 524). Weit verbreitet ist des weiteren der Einsatz von Bismutverbindungen zusammen mit organischen Zink- (WO 96/20967, US-A 5 910 373) oder Zinnverbindungen (WO 98/14492, US-A 6 001 900, US-A 5 859 165, US-A 6 124 380, WO 2000/46306, US-A 6 190 524). Die Anwendungsgebiete der in diesem Abschnitt erwähnten Bismutkatalysatoren liegen vorwiegend auf dem Gebiet der Lackbeschichtung.

Zusätzlich zu den bereits erwähnten Kombinationen mit anderen Metallkatalysatoren, wie z.B. Zinn- und Zinkverbindungen, finden sich in der Literatur auch einige Katalysatorkombinationen aus organischen Verbindungen der Elemente Lithium, Titan oder Bismut. Die Patentschriften US-A 5 952 053, WO 2000/46306 und US-A 5 952 053 führen z. B. Kombinationen von Lithium- und Bismutverbindungen auf, während in US-A 5 902 835 erwähnt wird, dass organische Titanverbindungen mit Bismutverbindungen kombiniert werden können, wobei diese Metallkatalysatorkombinationen allerdings keine besonderen Effekte zeigen.

In EP-A 0 603 597 werden flexible Polyurethanschäume beschrieben, die unter Verwendung eines Lithiumsalzes hergestellt werden. Die eingesetzten Polyolformulierungen enthalten a) ein Polyol, b) mindestens ein Treibmittel, c) urethanfördernde Katalysatoren und e) ein Lithiumsalz.

In DE-A 4 104 199 wird ein Verfahren zur Herstellung von Polyurethan-Elastomeren beschrieben. Es werden a) organische und/oder modifizierte organische Polyisocyanate, b) spezielle Polyether, c) Kettenverlängerer und/oder Vernetzer und d) spezielle Glycidylverbindungen gegebenenfalls in Gegenwart von e) Treibmitteln, f) Katalysatoren und g) Hilfsmitteln und/oder Zusatzstoffen.

Ein wichtiges Anwendungsgebiet von PUR-Elastomeren sind unter anderem Schuhsohlen. Bei ihrer Herstellung müssen die eingesetzten Katalysatorsysteme für eine gute Verarbeitbarkeit der Sohle sorgen. Im Detail zählen hierzu kurze Entformzeiten und hohe Entformhärten sowie lange Startzeiten für eine konturgenaue Formausfüllung. Darüber hinaus müssen die Katalysatoren gute Endeigenschaften begünstigen, wie hohe Endhärten und niedrige Stichaufweitungen bei Dauerbiegebelastung. Diesem Anforderungskatalog genügen die marktüblichen Organozinnkatalysatoren nicht.

Aufgabe der vorliegenden Erfindung war es daher, PUR-Elastomere zur Verfügung zu stellen, die hohe Endhärten und niedrige Stichaufweitungen bei Dauerbiegebelastung aufweisen, sowie ein Herstellverfahren, mit dem kurze Entformzeiten, hohe Entformhärten und lange Startzeiten möglich sind.

Überraschenderweise konnte diese Aufgabe mit speziellen Katalysatorkombinationen aus organischen Lithium- und Titanverbindungen bzw. aus organischen Lithium-, Titan- und Bismutverbindungen gelöst werden. Im Fall der Dreikomponentenmischung lässt sich zusätzlich die erforderliche Katalysatorkonzentration bei sonst gleicher Wirkung gegenüber der Zweikomponentenmischung deutlich senken, so dass sich dadurch außerdem toxikologische und ökonomische Vorteile ergeben.

Gegenstand der Erfindung ist ein Verfahren zur Herstellung von Polyurethanelastomeren, welches dadurch gekennzeichnet ist, dass
a) organische Di- und/oder Polyisocyanate mit
b) mindestens einem Polyetherpolyol mit einem zahlenmittleren Molekulargewicht von 800 g/Mol bis 25 000 g/Mol, bevorzugt von 800 bis 14 000 g/Mol, besonders bevorzugt 2000 bis 9000 g/Mol und mit einer mittleren Funktionalität von 1,6 bis 2,4, bevorzugt von 1,8 bis 2,4,
c) gegebenenfalls weiteren von b) verschiedenen Polyetherpolyolen mit einem zahlenmittleren Molekulargewicht von 800 g/Mol bis 25 000 g/Mol bevorzugt von 800 bis 14 000 g/Mol, besonders bevorzugt 2000 bis 9000 g/mol und mit mittleren Funktionalitäten von 2,4 bis 8, besonders bevorzugt von 2,5 bis 3,5,
d) gegebenenfalls Polymerpolyolen mit 1 bis 50 Gew.-%, vorzugsweise 1 bis 45 Gew.-% Füllstoff, bezogen auf Polymerpolyol, und mit OH-Zahlen von 10 bis 149 und mittleren Funktionalitäten von 1,8 bis 8, bevorzugt von 1,8 bis 3,5,
e) gegebenenfalls niedermolekularen Kettenverlängerern mit mittleren Funktionalitäten von 1,8 bis 2,1, vorzugsweise 2, und mit Molekulargewichten von 750 g/mol und kleiner, bevorzugt von 18 g/mol bis 400 g/mol, besonders bevorzugt von 60 g/mol bis 300 g/mol und/oder Vernetzern mit mittleren Funktionalitäten von 3 bis 4, vorzugsweise 3, und mit Molekulargewichten bis zu 750 g/Mol, bevorzugt von 18 g/Mol bis 400 g/Mol, besonders bevorzugt von 60 g/Mol bis 300 g/Mol, in Gegenwart von
f) Aminkatalysatoren und einer Katalysatormischung bestehend aus
g) mindestens einer organischen Titan- und/oder Zirkoniumverbindung
h) und mindestens einem organischen Lithiumcarboxylat
i) und gegebenenfalls zusätzlich mindestens einem organischen Bismutcarboxylat,
j) gegebenenfalls Treibmitteln und
k) gegebenenfalls Zusatzstoffen,
umgesetzt werden,
wobei das Verhältnis der Stoffmenge n_{Ti} der Titanionen und/oder n_{Zr} der Zirkoniumionen der Komponente g) zu der Stoffmenge n_{Li} der Lithiumionen der Kompo nente h) 0,2 bis 4 beträgt, bevorzugt 0,43 bis 1,5 und bei Einsatz der Komponente i) das Verhältnis der Stoffmenge n_{Bi} der Bismutionen der Komponente i) zu der Summe der Stoffmengen n_{Ti} und/oder n_{Zr} und n_{Li} 0,0001 bis 0,53, bevorzugt 0,0001 bis 0,24, besonders bevorzugt 0,0001 bis 0,15 beträgt.

Bevorzugt werden die PUR-Elastomere nach dem Prepolymer-Verfahren hergestellt, wobei zweckmäßigerweise im ersten Schritt aus zumindest einem Teil des Polyetherpolyols b) oder dessen Mischung mit Polyolkomponente c) und mindestens einem Di- oder Polyisocyanat a) ein Isocyanatgruppen aufweisendes Polyadditionsaddukt hergestellt wird. Im zweiten Schritt können massive PUR-Elastomere aus derartigen Isocyanatgruppen aufweisenden Prepolymeren durch Umsetzung mit niedermolekularen Kettenverlängerern und/oder Vemetzem d) und/oder dem restlichen Teil der Polyolkomponenten b) und gegebenenfalls c) hergestellt werden. Werden im zweiten Schritt Wasser oder andere Treibmittel, oder Mischungen daraus mitverwendet, können mikrozellulare PUR-Elastomere hergestellt werden.

Als Ausgangskomponente a) für das erfindungsgemäße Verfahren eignen sich aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

Q (NCO)ₙ

in der n = 2-4, vorzugsweise 2, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen aralipliatischen Kohlenwasserstoffrest mit 8 bis 15, vorzugsweise 8 bis 13 C-Atomen, bedeuten; z.B. sind Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan, 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenyl-methan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), oder Naphthylen-1,5-diisocyanat (NDI) geeignet.

Ferner kommen beispielsweise in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-A 874 430 und GB-A 848 671 beschrieben werden, m- und p-Isocyanatophenylsulfonylisocyanate gemäß US-PS 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, DE-A 25 37 685 und DE-A 25 52 350 beschrieben werden, Norbornan-diisocyanate gemäß US-A 3 492 301, Allophanatgruppen aufweisende Polyisocyanate, wie sie in GB-A 994 890, BE-A 761 626 und NL-A 7 102 524 beschrieben werden, Isocyanuratgruppen aufweisende Polyisocyanate, wie sie in US-A 3 001 9731, in DE-A 10 22 789, DE-A 12 22 067 und DE-A 1 027 394 sowie in DE-A 1 929 034 und DE-A 2 004 048 beschrieben werden, Urethangruppen aufweisende Polyisocyanate, wie sie z.B. in der BE-A 752 261 oder in US-A 3 394 164 und DE-A 3 644 457 beschrieben werden, acylierte Harnstoffgruppen aufweisende Polyisocyanate gemäß DE-A 1 230 778, Biuretgruppen aufweisende Polyisocyanate, wie sie in US-A 3 124 605, US-A 3 201 372 und US-A 3 124 605 sowie in GB-A 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-A 965 474 und GB-A 1 072 956, in US-A 3 567 763 und in DE-A 12 31 688 genannt werden, Umsetzungsprodukte der obengenannten Isocyanate mit Acetalen gemäß DE-A 1 072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), 4,4'-Diphenyhnethandiisocyanat, 2,4'-Diphenylmethandiisocyanat, 2,2'-Diphenylmethandiisocya-nat und Polyphenyl-polymethylen-polyisocyanate, wie sie durch Anilin-Formaldehyd-Kondensation und anschließende Phosgenierung hergestellt werden ("rohes MDI"), und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Besonders bevorzugt werden im erfindungsgemäßen Verfahren jedoch Isocyanatgruppen aufweisende Prepolymere verwendet, die hergestellt werden durch Umsetzung mindestens einer Teilmenge der Polyolkomponente b) und/oder c) und/oder Kettenverlängerer und/oder Vernetzer e) mit mindestens einem aromatischen Diisocyanat aus der Gruppe TDI, MDI, TODI, DIBDI, NDI, DDI, vorzugsweise mit 4,4'-MDI und/oder 2,4-TDI und/oder 1,5-NDI zu einem Urethangruppen und Isocyanatgruppen aufweisenden Polyadditionsprodukt mit einem NCO-Gehalt von 10 bis 27 Gew.-%, vorzugsweise von 12 bis 25 Gew.-%.

Wie bereits oben ausgeführt wurde, können zur Herstellung der isocyanatgruppenhaltigen Prepolymeren Mischungen aus b), c) und e) verwendet werden. Nach einer bevorzugt angewandten Ausführungsform werden die Isocyanatgruppen enthaltenden Prepolymere jedoch ohne Kettenverlängerer bzw. Vernetzer e) hergestellt.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und die Katalysatoren der Reaktionsmischung erst zur Herstellung der PUR-Elastomere einzuverleiben.

Geeignete Polyetherpolyole b) oder c) für die Herstellung der Elastomere können nach bekannten Verfahren hergestellt werden, beispielsweise durch Polyinsertion über die DMC-Katalyse von Alkylenoxiden, durch anionische Polymerisation von Alkylenoxiden in Gegenwart von Alkalihydroxiden oder Alkalialkoholaten als Katalysatoren und unter Zusatz mindestens eines Startermoleküls, das 2 bis 6, bevorzugt 2 bis 4 reaktive Wasserstoffatome gebunden enthält, oder durch kationische Polymerisation von Alkylenoxiden in Gegenwart von Lewis-Säuren wie Antimonpentachlorid oder Borfluorid-Etherat. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid, vorzugsweise werden Ethylenoxid und/oder 1,2-Propylenoxid eingesetzt. Die Alkylenoxide können einzeln, alternierend nacheinander oder als Mischungen verwendet werden. Bevorzugt werden Mischungen aus 1,2-Propylenoxid und Ethylenoxid eingesetzt, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. Als Startermolekül kommen Wasser oder 2- und 3-wertige Alkohole in Betracht, wie Ethylenglykol, 1,2-Propandiol und 1,3-Propandiol, Diethylenglykol, Dipropylenglykol, Ethandiol-1,4, Glycerin, Trimethylolpropan usw. Geeignete Polyetherpolyole, vorzugsweise Polyoxypropylen-polyoxyethylen-polyole, besitzen mittlere Funktionalitäten von 1,6 bis 2,4, bevorzugt 1,8 bis 2,4 und zahlenmittlere Molekulargewichte von 800 g/Mol bis 25 000 g/Mol, vorzugsweise 800 bis 14 000 g/Mol, besonders bevorzugt 2 000 bis 9 000 g/Mol.

Bevorzugt werden bei der Herstellung der Elastomere di- bzw. trifunktionelle Polyetherpolyole mit einem zahlenmittleren Molekulargewicht von 800 bis 25 000, vorzugsweise von 800 bis 14 000 g/Mol, besonders bevorzugt von 2 000 bis 9 000 g/Mol als Komponenten b) oder c) eingesetzt.

Als Polymerpolyole d) eignen sich außer den o.g. Polyetherpolyolen auch polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, hergestellt werden, sowie Polyetherpolyol-Dispersionen, die als disperse Phase - üblicherweise in Mengen von 1 bis 50 Gew.-%, vorzugsweise 1 bis 45 Gew.-%, bezogen auf Polymerpolyol, z.B. anorganische Füllstoffe, Polyharnstoffe (PHD), Polyhydrazide, tert.-Aminogruppen gebunden enthaltende Polyurethane und/oder Melamin enthalten.

Zur Herstellung der PUR-Elastomeren können zusätzlich als Komponente e) niedermolekulare difunktionelle Kettenverlängerer, tri- oder tetrafunktionelle Vernetzer oder Mischungen aus Kettenverlängerern und Vemetzem verwendet werden.

Derartige Kettenverlängerer und Vernetzer e) werden zur Modifizierung der mechanischen Eigenschaften, insbesondere der Härte der PUR-Elastomeren eingesetzt. Geeignete Kettenverlängerer wie Alkandiole, Dialkylenglykole und Polyalkylen-polyole und Vernetzungsmittel, wie z.B. 3- oder 4-wertige Alkohole und oligomere Polyalkylen-polyole mit einer Funktionalität von 3 bis 4, besitzen üblicherweise Molekulargewichte < 750 g/Mol, vorzugsweise von 18 bis 400 g/Mol besonders bevorzugt von 60 bis 300 g/Mol. Als Kettenverlängerer werden vorzugsweise Alkandiole mit 2 bis 12, vorzugsweise 2, 4 oder 6 Kohlenstoffatomen, z.B. Ethandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol sowie Polyoxyalkylenglykole verwendet. Geeignet sind auch verzweigtkettige und/oder ungesättigte Alkandiole mit üblicherweise nicht mehr als 12 Kohlenstoffatomen, wie z.B. 1,2-Propandiol, 2-Methyl-1,3-Propandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons oder Resorcins, z.B. 1,4-Di-(β-hydroxyethyl)-hydrochinon oder 1,3-(β-Hydroxyethyl)-resorcin, Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl- und N,N'-Dicyclohexyl-, (p- bzw. m-) -Phenylendiamin, N,N'-Dimethyl-, N,N'-Diethyl-, N,N'-Diisopropyl-, N,N'-Di-sec.-butyl-, N,N'Dicyclohexyl-, -4,4'-diamino-diphenylmethan, N,N'-Di-sec.-butylbenzidin, Methylen-bis(4-amino-3-benzoesäuremethylester), 2,4-Chlor-4,4'-diamino-diphenylmethan, 2,4- und 2,6-Toluylendiamin.

Die Verbindungen der Komponente e) können in Form von Mischungen oder einzeln eingesetzt werden. Verwendbar sind auch Gemische aus Kettenverlängerern und Vernetzern.

Zur Einstellung der Härte der PUR-Elastomeren können die Aufbaukomponenten b), c), d) und e) in relativ breiten Mengenverhältnissen variiert werden, wobei die Härte mit zunehmendem Gehalt an Komponente e) in der Reaktionsmischung ansteigt.

Zum Erhalt einer gewünschten Härte des PUR-Elastomeren können die erforderlichen Mengen der Aufbaukomponenten b), c), d) und e) auf einfache Weise experimentell bestimmt werden. Vorteilhafterweise werden 1 bis 50 Gew.-Teile, vorzugsweise 2,5 bis 20 Gew.-Teile des Kettenverlängerers und/oder Vernetzers e), bezogen auf 100 Gew.-Teile der höhermolekularen Verbindungen b), c) und d) verwendet.

Als Komponente f) können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylentriamin und höhere Homologe (DE-A 26 24 527 und DE-A 26 24 528), 1,4-Diazabicyclo-[2,2,2]-octan, N-Methyl-N'-dimethylaminoethyl-piperazin, Bis-(dimethylaminoalkyl)-piperazine, N,N-Dimethylbenzylamin, N,N-Dimethylcydohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, Bis-(dimethylaminopropyl)-amin, 1,2-Dimethylimidazol, 2-Methylimidazol, monocyclische und bicyclische Amidine, Bis-(dialkylamino)-alkylether, wie z.B. Bis(dimethylaminoethyl)ether, sowie Amidgruppen (vorzugsweise Formamidgruppen) aufweisende tertiäre Amine gemäß DE-A 25 23 633 und DE-A 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren können ferner Silaamine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt.

Bevorzugt wird mindestens ein organisches Carboxylat des Lithiums h) mit mindestens einer organischen Verbindung des Titans und/oder Zirkoniums g) als Katalysator eingesetzt. Bei Bedarf wird die Katalysatorkombination um mindestens eine Bismutverbindung i) als dritte Komponente erweitert. Die Katalysatoren können der Polyol-Formulierung entweder als fertige Mischung zugesetzt werden oder separat im entsprechenden Verhältnis. Bevorzugt ist die separate Zugabe.

Als Komponente h) können besonders bevorzugt dem Fachmann geläufige gesättigte oder ungesättigte, aliphatische oder alicyclische sowie aromatische Carboxylate des Lithiums eingesetzt werden. Sie entsprechen den folgenden allgemeinen Formeln:

[Li(OOCR)]

[Li₂((OOC)₂R)]

wobei R ein Kohlenwasserstoffrest mit 1 bis 25 Kohlenstoffatomen ist. Bevorzugte Katalysatoren sind z.B. Lithium(I)-versatat, -tallat, -oxalat, -adipat und -stearat. Besonders bevorzugte Katalysatoren sind Lithium(I)-naphthenat, -decanoat, -butyrat, -isobutyrat, -nonat, -benzoat und -caprioat. Besonders bevorzugt sind auch Lithium(I)-neodecanoat, -2-ethylhexanoat und -octanoat.

Die Komponente h) kann auch als Lösung eines Lithiumhydroxids oder -carbonats oder als Lösung einer Mischung dieser Salze in einer oder mehreren der im vorherigen Absatz charakterisierten Carbonsäuren verwendet werden.

Als Komponente g) können dem Fachmann geläufige organische Verbindungen des Titans und/oder Zirkoniums eingesetzt werden. Sie entsprechen vorzugsweise den folgenden generellen Formeln:

[M(L¹)(L²)(L³)(L⁴)]ₙ

[M(L¹)(L²)(L³)]ₙ

[M(L¹)(L²)]ₙ

[M(L¹)]ₙ

wobei M Titan und Zirkonium bedeuten, n Werte von 1 bis 20 einnehmen kann und L¹, L², L³ und L⁴ gleiche oder verschiedene über O, S oder N-Atome koordinierende Liganden der folgenden Gruppen sein können:
(1) Alkoholate, Phenolate, Glykolate, Thiolate, Carboxylate oder Aminoalkoholate, die 1 bis 20 Kohlenstoffatome und optional eine oder mehrere funktionelle Gruppen (z. B. Hydroxy, Amino, Carbonylato etc.) enthalten oder Sauerstoff-, Schwefel-, oder Stickstoff- enthaltende Bindungen (wie z. B. in Ethern, Thioethern, Aminen oder Carbonylen) aufweisen
(2) verschiedene Fluor-freie, sterisch ungehinderte Chelatliganden aus der Gruppe der 1-Diketone, wie z.B. Benzoylaceton, Dibenzoylmethan, Ethylbenzoylacetat, Methylacetoacetat, Ethylacetoacetat und 2,4-Pentandion (auch bekannt als Acetylaceton) und andere Chelatliganden, wie z.B. N,N-Dimethylethanolamin, Triethanolamin, Salicylaldehyd, Salicylamid, Phenylsalicylat, Cyclopentanon-2-carbonsäure, Bisacetylacetylaceton, Thioacetylaceton, N,N'-bis-(salicylidene)ethylendiamin, Glykolsäure, Ethylenglykol u.s.w.

Bevorzugte Komponenten g) sind z.B. Titan(IV)- isopropoxid, Titan(IV)-n-butoxid, Titan(IV)-2-ethylhexoxid, Titan(IV)-n-pentoxid, Titan(IV)-(triethanolaminato)isopropoxid, Titan(IV)-(triethanolaminato)-n-butoxid, Isopropyl-triisostearyl-titanat, Bis(8-chinolinolato)titanium(IV)-dibutoxid, Bis(ethylacetoacetato)titanium(IV)-diisobutoxid, Titan(IV)-bis(ethylacetoacetato)diisopropoxid, Zirkonium(IV)-isopropoxid, Zirkonium(IV)-n-butoxid, Zirkonium(IV)-2-ethylhexoxid, Zirkonium(IV)-n-pentoxid, Zirkomum(IV)-(triethanolaminato)isopropoxid, Zirkomum(IV)-(triethanolaminato)-n-butoxid, Isopropyl-triisostearyl-zirkonat, Bis(8-chinolinolato)zirkonium-(IV)-dibutoxid und Bis(ethylacetoacetato)zirkonium(IV)-diisobutoxid.

Besonders bevorzugt sind Titanverbindungen mit Liganden, wie sie im obigen, mit (2) bezeichneten Abschnitt aufgeführt sind. Von diesen Titanverbindungen werden vorzugsweise Titan(IV)-diisopropoxid-bis(2,4-pentandionat), Titan(IV)-triisopropoxid(2,4-pentandionat), Ethoxybis(pentan-2,4-dionato-0,0')(propan-2-olato)titan, Titan(IV)-oxid-acetylacetonat, Bis(diacetylacetonato)titanium(IV)-butoxid-isopropoxid und Bis(diacetylacetonato)titanium(IV)-ethoxid-isopropoxid eingesetzt.

Zahlreiche der unter g) aufgeführten Katalysatoren können Agglomerate und/oder höhermolemare Kondensationsprodukte bilden, die zwei oder mehr Metallzentren besitzen, welche durch einen oder mehr Brückenliganden miteinander verbunden sind. Deshalb kann n von 1 bis ungefähr 20 variieren. Verbindungen mit n zwischen 1 bis 10 sind bevorzugt.

Die Komponente i) umfasst gesättigte oder ungesättigte, aliphatische oder alicyclische sowie aromatische Bismut-Carboxylate. Sie entsprechen vorzugsweise den folgenden allgemeinen Formeln:

[Bi(OOCR)₃]

[Bi₂((OOC)₂R)₃]

wobei R ein Kohlenwasserstoffrest mit 1 bis 25 Kohlenstoffatomen ist.

Bevorzugte Carboxylate sind Bismut(III)-versatat, -tallat, -stearat, -adipat, -oxalat. Bevorzugt sind auch Bismut(III)-naphthenat, -decanoat, -butyrat, -isobutyrat, -nonat, -caprioat. Besonders bevorzugt sind Bismut(III)-neodecanoat, -2-ethylhexanoat und -octanoat.

Die Komponenten g), h) und/oder i) werden bevorzugt als flüssige Zubereitungen mit einem oder mehreren Lösungsmitteln verwendet Insbesondere können als Lösungsmittel gesättigte oder ungesättigte, aliphatische oder alicyclische sowie aromatische Carbonsäuren der allgemeinen Formeln:

RCOOH

HOOC-R-COOH

verwendet werden, wobei R ein Kohlenwasserstoffrest mit 1 bis 25 Kohlenstoffatomen ist.

Bevorzugt sind z.B. Neodecansäure, 2-Ethylhexansäure und Naphtensäure.
Anstelle der vorgenannten Carbonsäuren können auch folgende Lösungsmittel eingesetzt werden:
- aliphatische und aromatische Flüssigkeiten, wie z.B. Stoddard-Lösungsmittel, Naphtha, Testbenzin, Lösungspetroleum, Xylol, Hexan, Heptan, Toluol und paraffinisches Mineralöl,
- Ester, wie z.B. Ethylacetat und Isopropylacetat,
- Alkohole, wie z.B. Ethanol, n-Propanol, Isopropanol, n-Butanol, 2-(2-Butoxyethoxy)ethanol, 2-(2-Ethoxyethoxy)ethanol, Diethylenglykol, Triethylenglykol, Diethylenglykolmonoethylether, Ethylenglykol,
- Ketone, wie z.B. Methylethylketon, Aceton und
- Ether, wie z.B. Diethylenglykolbutylether
- sowie in besonderen Fällen auch Wasser.

Die Katalysatorkombinationen aus den Komponenten g) und h) bzw. g), h) und i) werden in der Regel in einer Menge zwischen etwa 0,001 und 10 Gew.-%, bevorzugt 0,01 bis 0,5 Gew.-% eingesetzt, bezogen auf die Gesamtmenge an Verbindungen aus b) bis k).

Die Katalysatorkombinationen aus den Komponenten g) und h) werden in einem solchen Verhältnis der Stoffmenge n_{Ti} der Titanionen und/oder n_{Zr} der Zirkoniumionen der Komponente g) zur Stoffmenge n_{Li} der Lithiumionen der Komponente h) gemischt, dass Werte von 0,2 bis 4, bevorzugt 0,43 bis 1,5 eingestellt werden. Bei zusätzlicher Verwendung von Komponente i), wird die Komponente i) in einer solchen Stoffmenge n_{Bi} der Bismutionen der Komponente i) eingesetzt, dass das Verhältnis der Stoffmenge n_{Bi} der Bismutionen der Komponente i) zu der Summe aus n_{Ti} und/oder n_{Zr} und n_{Li} 0,0001 bis 0,53, bevorzugt 0,0001 bis 0,24, besonders bevorzugt 0,0001 bis 0,15 beträgt.

In Abwesenheit von Feuchtigkeit und physikalisch oder chemisch wirkenden Treibmitteln können kompakte PUR-Elastomere, z.B. PUR-Schuhaußensohlen hergestellt werden.

Zur Herstellung von mikrozellularen PUR-Elastomeren findet als Treibmittel j) bevorzugt Wasser-Verwendung, das mit den organischen Di- und/oder Polyisocyanaten oder mit den Isocyanatgruppen aufweisenden Prepolymeren a) in situ unter Bildung von Kohlendioxid und Aminogruppen reagiert, die ihrerseits mit weiteren Isocyanatgruppen zu Harnstoffgruppen weiterreagieren und hierbei als Kettenverlängerer wirken.

Sofern der Polyurethan-Formulierung Wasser zugegeben wird, um die gewünschte Dichte einzustellen, wird dieses üblicherweise in Mengen von 0,001 bis 3,0 Gew.-%, vorzugsweise von 0,01 bis 2,0 Gew.-% und insbesondere von 0,05 bis 0,7 Gew.-%, bezogen auf das Gewicht der Komponenten a), b) und gegebenenfalls c), d) und e), verwendet.

Als Treibmittel j) können anstelle von Wasser oder vorzugsweise in Kombination mit Wasser auch Gase oder leicht flüchtige anorganische oder organische Substanzen, die unter dem Einfluss der exothermen Polyadditionsreaktion verdampfen und vorzugsweise einen Siedepunkt unter Normaldruck im Bereich von -40 bis 120°C, vorzugsweise von -30 bis 90°C besitzen, als physikalische Treibmittel eingesetzt werden. Als organische Treibmittel kommen z.B. Aceton, Ethylacetat, halogensubstituierte Alkane oder perhalogenierte Alkane, wie (R134a, R141b, .R365mfc, . R245fa), ferner Butan, Pentan, Cyclopentan, Hexan, Cyclohexan, Heptan oder Diethylether, als anorganische Treibmittel z.B. Luft, CO₂ oder N₂O, in Frage. Eine Treibwirkung kann auch durch Zusatz von Verbindungen erzielt werden, die sich bei Temperaturen oberhalb der Raumtemperatur unter Abspaltung von Gasen, beispielsweise von Stickstoff und/oder Kohlendioxid, zersetzen wie Azoverbindungen, z.B. Azodicarbonamid oder Azoisobuttersäurenitril, oder Salzen wie Ammoniumbicarbonat, Ammoniumcarbamat oder Ammoniumsalzen organischer Carbonsäuren, z.B. Monoammoniumsalze der Malonsäure, Borsäure, Ameisensäure oder Essigsäure. Weitere Beispiele für Treibmittel sowie Einzelheiten über die Verwendung von Treibmitteln sind in R. Vieweg, A. Höchtlen (Hrsg.): "Kunststoff-Handbuch", Band VII, Carl-Hanser-Verlag, München 3. Auflage, 1993, S.115 bis 118, 710 bis 715 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen eingesetzt werden können, hängt von der angestrebten Dichte ab und der eingesetzten Menge an Wasser. Die erforderlichen Mengen können experimentell leicht ermittelt werden. Zufriedenstellende Ergebnisse liefern üblicherweise Feststoffmengen von 0,5 bis 35 Gew.-%, vorzugsweise 2 bis 15 Gew.-%, Flüssigkeitsmengen von 0,5 bis 30 Gew.-%, vorzugsweise von 0,8 bis 18 Gew.-% und/oder Gasmengen von 0,01 bis 80 Gew.-%, vorzugsweise von 10 bis 50 Gew.-%, jeweils bezogen auf das Gewicht der Komponenten a), b), c), d und e). Die Gasbeladung mit z. B. Luft, Kohlendioxid, Stickstoff und/oder Helium kann sowohl über die höhermolekulare Polyhydroxylverbindungen b), c) und d) über das niedermolekulare Kettenverlängerungs- und/oder Vernetzungsmittel e) als auch über die Polyisocyanate a) oder über a) und b) und gegebenenfalls c), d) und e) erfolgen.

Die Reaktionsmischung zur Herstellung der kompakten oder zelligen PUR-Elastomeren kann gegebenenfalls mit Zusatzstoffen k) versehen werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole, Paraffinöle, Rizinusöl- bzw. Ricinolsäureester, Türkischrotöl, Erdnussöl und Zellregler wie Paraffine, Fettalkohole und Polydimethylsiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen b) und c) angewandt. Zugesetzt werden können auch Reaktionsverzögerer, ferner Pigmente oder Farbstoffe und an sich bekannte Flammschutzmittel, ferner Stabilisatoren gegen Alterungs- und Witterungseinflüsse, Weichmacher und fungistatisch und bakteriostatisch wirkende Substanzen.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München, 3. Auflage, 1993, S.118 bis 124 beschrieben.

Zur Herstellung der PUR-Elastomeren werden die Komponenten in solchen Mengen zur Umsetzung gebracht, dass das Äquivalenzverhältnis der NCO-Gruppen der Isocyanate a) zur Summe der gegenüber Isocyanatgruppen reaktiven Wasserstoffe der Komponenten b), c), d) und e) sowie eventuell eingesetzter chemisch wirkender Treibmittel j) 0,8:1 bis 1,2:1, vorzugsweise 0,95:1 bis 1,15:1 und insbesondere 1,00:1 bis 1,05:1 beträgt.

Die PUR-Elastomere können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden. Vorzugsweise werden sie nach dem Prepolmer-Verfahren hergestellt.

In einer Ausführungsform der Herstellung der PUR-Elastomere werden die Ausgangskomponenten in Abwesenheit von Treibmitteln j) üblicherweise bei einer Temperatur von 20 bis 80°C, vorzugsweise von 25 bis 60°C homogen gemischt, die Reaktionsmischung in ein offenes, gegebenenfalls temperiertes Formwerkzeug eingebracht und ausgehärtet. In einer weiteren Variante der Herstellung der PUR-Elastomeren werden die Aufbaukomponenten in gleicher Weise in Gegenwart von Treibmitteln j), vorzugsweise Wasser, gemischt und in das gegebenenfalls temperierte Formwerkzeug eingefüllt. Nach der Befüllung wird das Formwerkzeug geschlossen und man lässt die Reaktionsmischung unter Verdichtung, z.B. mit einem Verdichtungsgrad (Verhältnis von Formkörperdichte zu Freischaumdichte) von 1,05 bis 8, vorzugsweise von 1,1 bis 6 und insbesondere 1,2 bis 4 zur Bildung von Formkörpern aufschäumen. Sobald die Formkörper eine ausreichende Festigkeit besitzen, werden sie entformt. Die Entformungszeiten sind u.a. abhängig von der Temperatur und der Geometrie des Formwerkzeugs und der Reaktivität der Reaktionsmischung und betragen üblicherweise 1,5 bis 15 Minuten.

Die PUR-Elastomere weisen u.a. abhängig vom Füllstoffgehalt und -typ üblicherweise Dichten im Bereich von 180 bis 1100 kg/m³ auf. Sie werden z.B. in Formsohlen oder einkomponentigen Direktbesohlungssystemen mit Dichten von 400 bis 650 kg/m³, in Stiefelschaften mit Dichten von 500 bis 700 kg/m³, in hochverdichteten oder kompakten Außensohlen von zweischichtigen Sohlen oder Direktbesohlungssystemen mit Dichten von 800 bis 1100 kg/m³, in Zwischensohlen von zweischichtigen Sohlen oder Direktbesohlungssystemen mit Dichten von 400 bis 500 kg/m³ und in Einlegesohlen mit Dichten von 180 bis 400 kg/m³ eingesetzt.

Die PUR-Elastomere stellen besonders wertvolle Rohmaterialien für Schuhsohlen in ein- oder mehrschichtigem Aufbau dar.

Die Erfindung soll anhand der nochfolgenden Beispiele näher erläutert werden.

### Beispiele

Die Herstellung der Polyurethan-Prüfkörper erfolgte derart, dass man die A-Komponente (Tabelle 1) bei 30°C in einer Niederdruck-Schäumanlage (ND1) mit der B-Komponente (Tabelle 2) bei 30°C vermischte, die Mischung in eine auf 50°C temperierte Aluminium-Klappform (Größe 200*140*10 mm) goss, die Klappform schloss und nach 3 Minuten des Elastomer entformte.

Aus den so hergestellten Elastomer-Platten wurde die Shore A Härte (DIN 53 505) unmittelbar nach Entformen und nach 24 h Lagerung bestimmt. Weiterhin wurde die Stichaufweitung (DIN 53 522) eines 2 mm breiten Durchstiches in der Biegelinie von Prüfkörpern (Maße 2 cm x 15 cm x 1 cm) nach 60 000 Biegezyklen ermittelt. Die Ergebnisse sind in den Tabellen 4 bis 8 zusammengestellt.

### Beispiele 1-5

Das Polyurethanelastomer wurde durch die Umsetzung von 100 Teilen der Polyolformulierung (A-Komponente, siehe Tabelle 1) und 61 Teilen des Präpolymers (B-Komponente, siehe Tabelle 2) erhalten. Die .einzelnen Beispiele einschließlich der physikalischen und chemischen Eigenschaften sind in den Tabellen 4-8 aufgelistet. Die den Handelsnamen entsprechenden chemischen Bezeichnungen der in den Tabellen aufgeführten Katalysatoren und sonstigen Komponenten stehen in Tabelle 3. Neben den erfindungsgemäßen Katalysatorkombinationen wurden auch Versuche mit nicht erfindungsgemäßen Metallverbindungen und Mischungen als Vergleich durchgeführt.

**Tabelle 1: Polyolformulierung (A-Komponente)**

| **Gew.-%** | **A-Komponente** |
|---|---|
| Rest auf 100 | Polyetherdiol b) (PO:EO Gewichtsverhältnis 70:30; Molmasse von 4000 g/mol) |
| 10 | Polyethertriol c) (PO:EO Gewichtsverhältnis 78:22 Molmasse von 6000 g/mol |
| 10 | Butandiol e) |
| 0,2 | TELA e) |
| 0,5 | DABCO f) |
| Y | Katalysatoren und Menge (siehe Tabelle 4) |
| 0,10 | DC-190 k) |
| 0,35 | Wasser j) |

**Tabelle 2: Rezeptur des Präpolymers (B-Komponente)**

| **Gew.-%** | **B-Komponente** |
|---|---|
| 66 | 4,4'-MDI a) |
| 5 | Polymeres MDI (29,8 Gew.-% NCO, Funktionalität 2,1) a) |
| 29 | Gemisch aus Tripropylenglykol und PO-Polyethem; zahlenmittlere Molmasse 690 g/mol: Funktionalität ~2 b) |

**Tabelle 3: Erklärung der Handelsnamen / Abkürzungen**

| **Handelsname od. Abkürzung** | **Chemischer Name** |
|---|---|
| Tyzor® AA 95 von DuPont | Bis(diacetylacetonato)titanium(IV)-butoxid-isopropoxid in Butanol |
| Tyzor® AA 105 von DuPont | Bis(diacetylacetonato)titanium(IV)-ethoxid-isopropoxid |
| Li 2 Hex-Cem® von OMG (Ontokumpu Mooney Group) | Lithium-2-ethylhexanoat in 2-(2-Ethoxyethoxy)ethanol |
| Li Ten-Cem® water sol. von OMG | Lithiumneodecanoat in wässriger Lösung |
| DBTL | Dibutylzinndilaurat |
| Coscat® 83 von D.H. Erbslöh | Bismut(III)-neodecanoat |
| TELA | Triethanolamin |
| DABCO | Diaminobicyclooctan |
| DC-190® von Air Products | Schaumstabilisator |

In den Tabellen 4 bis 8 werden die Testergebnisse an den Polyurethanelastomeren aufgeführt, die mit Hilfe verschiedener Katalysatoren hergestellt wurden. Die Konzentration der Katalysatoren ist in Gew.-% bezogen auf die A-Komponente angegeben. Es werden außerdem die Stoffmengenverhältnisse [nTi:nLi] und [(nTi + nLi): nBi] angegeben.

**Tabelle 4: Einsatz von Zinnkatalysatoren (Stand der Technik)**

| **Versuch** | **Zinnkatalysator** | | **Startzeit in [sec]** | **Abbindezeit [sec]** | **Shore A-Härte ermittelt nach x min nach Entformen** | | | | **Shore-A-Härte nach 24 h nach Entformen** | **Stichaufweitung in mm nach b = 60000 Biegungen** |
|---|---|---|---|---|---|---|---|---|---|---|
| | **Name** | **Menge in Gew.-%** | | | **nach 0 min** | **nach 2 min** | **nach 10 min** | **nach 60 min** | | |
| 1 | DBTL | 0,02 | 11 | 22 | 37 | 42 | 47 | 51 | 54 | 35000*/30000* |
| | | | | | | | | | | 35000*/30000* |
| 2 | DBTL | 0,03 | 10 | 15 | 34 | 38 | 44 | 48 | 52 | 6,7/60000* |

| | | | | | | | | | | |
|---|---|---|---|---|---|---|---|---|---|---|
| Alle mit *gekennzeichneten Werte geben die Anzahl b der Biegungen an, nach denen ein Teststreifen gebrochen war. | | | | | | | | | | |

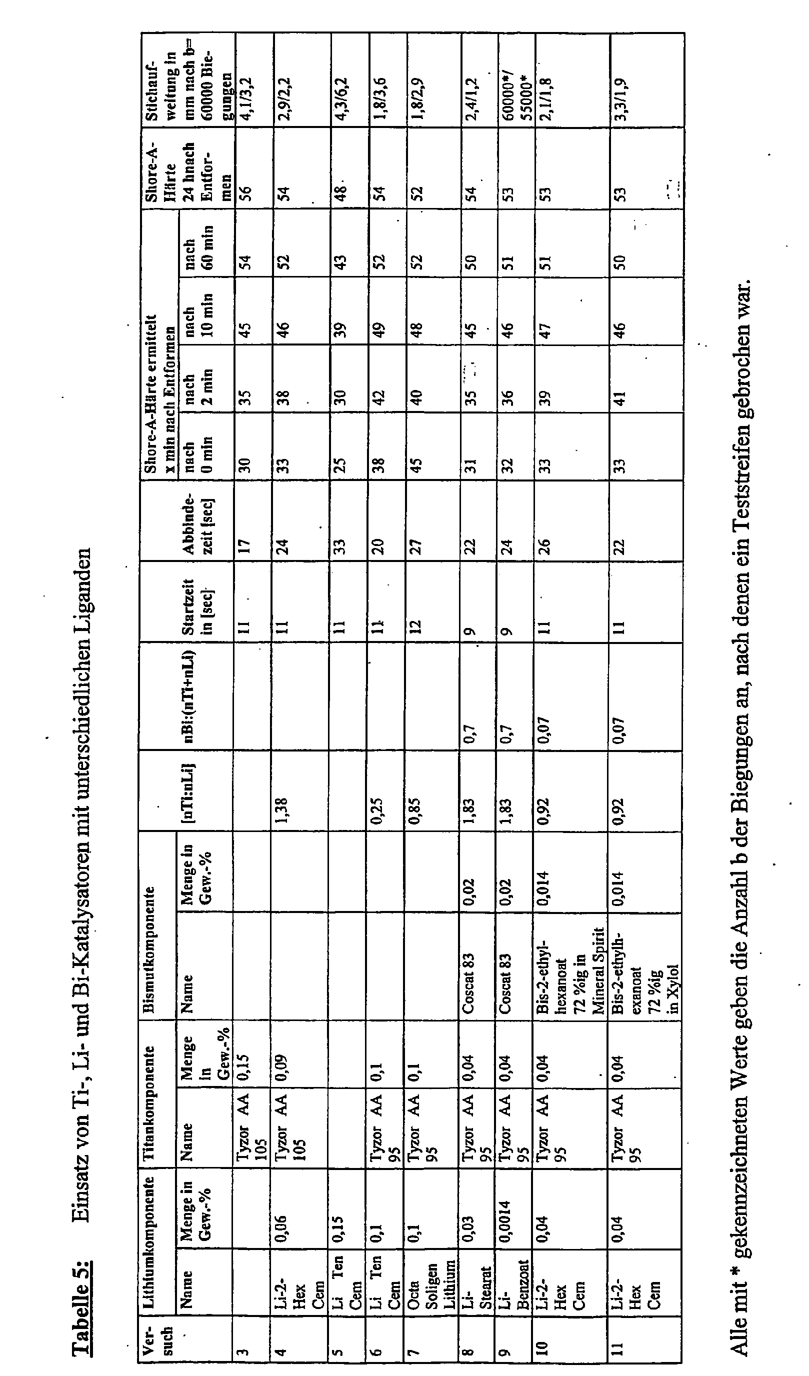

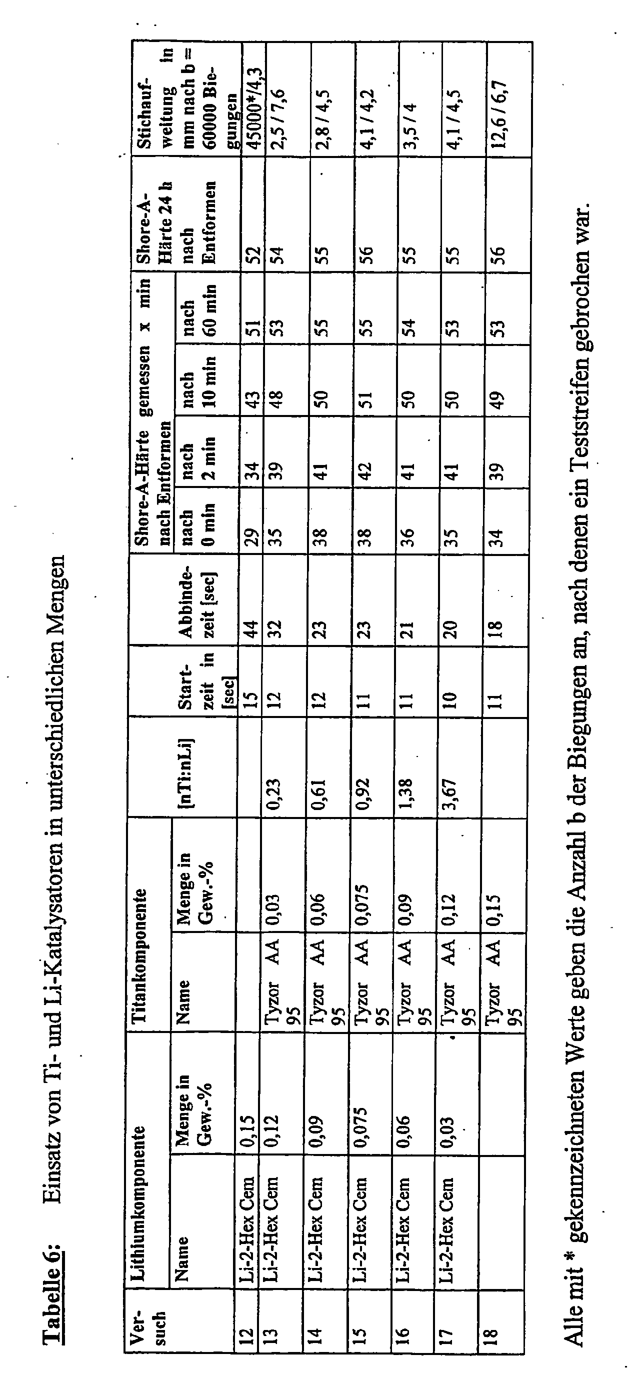

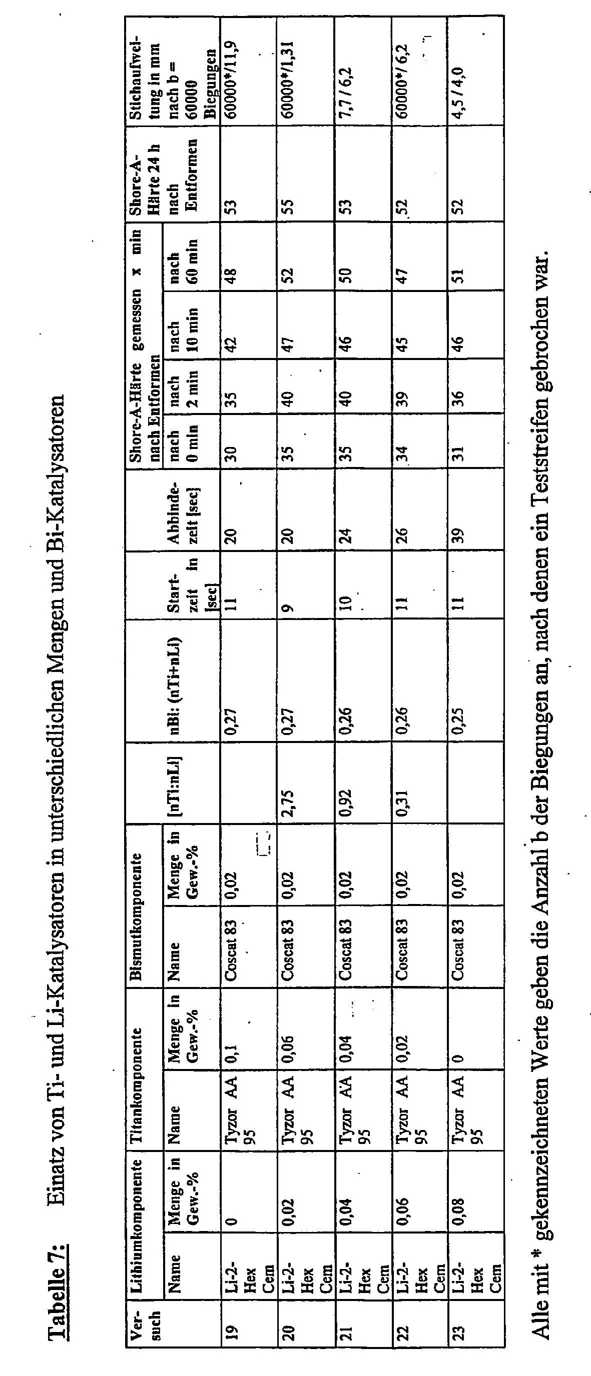

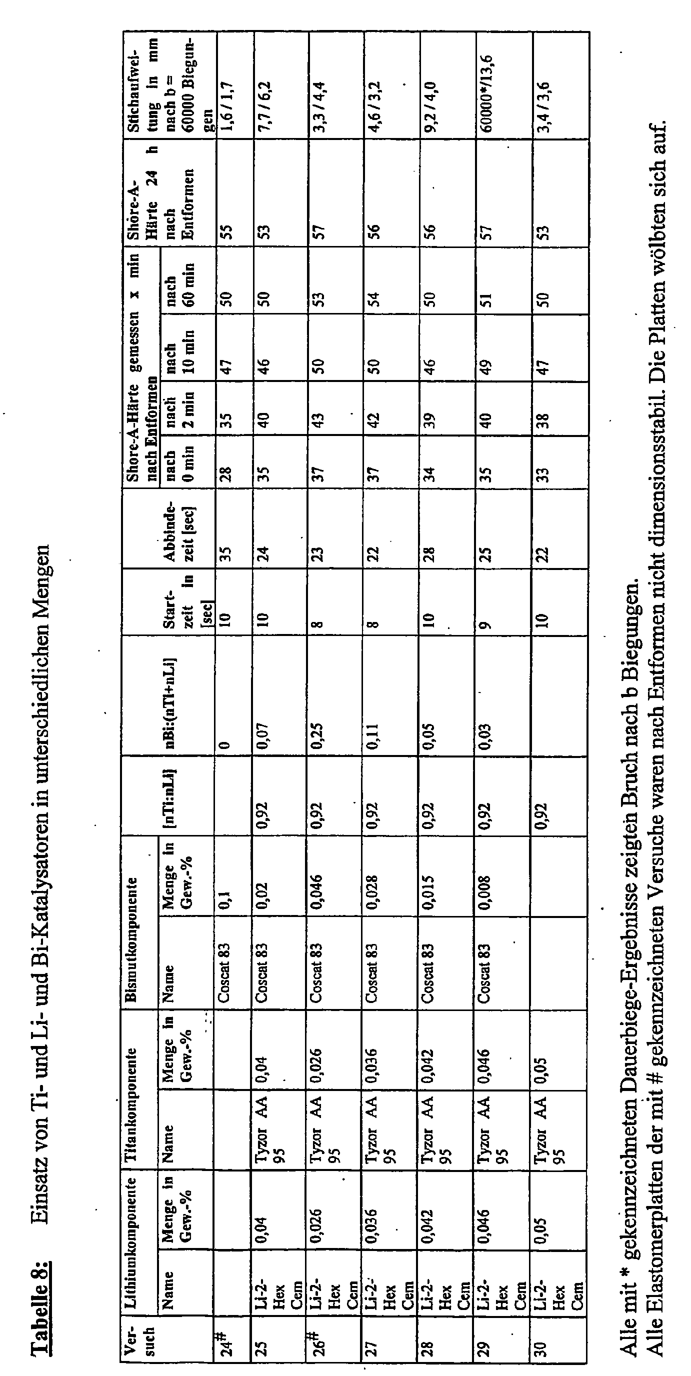

## Patentansprüche

1. Verfahren zur Herstellung von Polyurethanelastomeren, **dadurch gekennzeichnet, dass**
(a) organische Di- und/oder Polyisocyanate mit
(b) mindestens einem Polyetherpolyol mit einem zahlenmittleren Molekulargewicht von 800 g/Mol bis 25 000 g/mol und mit einer mittleren Funktionalität von 1,6 bis 2,4,
(c) gegebenenfalls weiteren von b) verschiedenen Polyetherpolyolen mit einem zahlenmittleren Molekulargewicht von 800 g/Mol bis 25 000 g/Mol und mit mittleren Funktionalitäten von 2,4 bis 8,
(d) gegebenenfalls Polymerpolyolen mit 1 bis 50 Gew.-%, vorzugsweise 1 bis 45 Gew.-% Füllstoff, bezogen auf Polymerpolyol, und mit OH-Zahlen von 10 bis 149 und mittleren Funktionalitäten von 1,8 bis 8,
(e) gegebenenfalls niedermolekularen Kettenverlängerern mit mittleren Funktionalitäten von 1,8 bis 2,1 und mit Molekulargewichten von 750 g/mol und kleiner und/oder Vernetzern mit mittleren Funktionalitäten von 3 bis 4 und mit Molekulargewichten bis zu 750 g/Mol in Gegenwart von
(f) Aminkatalysatoren und einer Katalysatormischung bestehend
(g) aus mindestens einer organischen Titan- und/oder Zirkoniumverbindung
(h) und mindestens einem organischen Lithiumcarboxylat
(i) und gegebenenfalls zusätzlich mindestens einem organischem Bismutcarboxylat,
j) gegebenenfalls Treibmitteln und
k) gegebenenfalls Zusatzstoffen,
umgesetzt werden,
wobei das Verhältnis der Stoffmenge n_{Ti} der Titanionen und/oder n_{Zr} der Zirkoniumionen der Komponente g) zu der Stoffmenge n_{Li} der Lithiumionen der Komponente h) 0,2 bis 4 beträgt und bei Einsatz der Komponente i) das Verhältnis der Stoffmenge n_{Bi} der Bismutionen der Komponente i) zu der Summe der Stoffmengen n_{Ti} und/oder n_{Zr} und n_{Li} 0,0001 bis 0,53 beträgt.

2. Verfahren gemäß Anspruch 1, **dadurch gekennzeichnet, dass** die Katalysatormischung in einer Menge von 0,001 bis 10 Gew.-%, bevorzugt 0,01 bis 0,4 Gew.-% eingesetzt wird, bezogen auf die Gesamtmenge an Verbindungen b) bis k).

3. Verfahren gemäß Anspruch 1 oder 2, **dadurch gekennzeichnet, dass** als Katalysatormischung die Komponenten g), h) und i) eingesetzt werden.

4. Verfahren gemäß Anspruch 1 oder 2, **dadurch gekennzeichnet, dass** als Katalysatormischung die Komponenten g) und h) eingesetzt werden.

5. Verfahren gemäß einem oder mehreren der Ansprüche 1 bis 4, **dadurch gekennzeichnet, dass** als Komponente a) ein Prepolymer aus i) 4,4'-Diphenylmethandiisocyanat und/oder aus durch Carbodiimidisierung modifiziertem 4,4'-Diphenylmethandiisocyanat und ii) ein oder mehreren Polyetherpolyolen mit einer OH-Zahl von 10 bis 112, gegebenenfalls mit Polyethylenglykolen oder Polypropylenglykolen mit Molmassen von 135 g/mol bis 700 g/mol eingesetzt wird.

6. Verfahren zur Herstellung von elastomeren Formteilen, **dadurch gekennzeichnet, dass**
i) die gemäß Anspruch 1 eingesetzten Komponenten (a) bis (k) homogen gemischt werden, wobei das Verhältnis der Stoffmenge n_{Ti} der Titanionen und/oder n_{Zr} der Zirkoniumionen der Komponente g) zu der Stoffmenge n_{Li} der Lithiumionen der Komponente h) 0,2 bis 4 beträgt und bei Einsatz der Komponente i) das Verhältnis der Stoffmenge n_{Bi} der Bismutionen der Komponente i) zu der Summe der Stoffmengen n_{Ti} und/oder n_{Zr} und n_{Li} 0,0001 bis 0,53 beträgt,
ii) die Reaktionsmischung aus (i) in ein Formwerkzeug eingebracht und ausgehärtet wird, wobei im Fall der Abwesenheit von Treibmitteln (j) die Komponenten bei einer Temperatur von 20 bis 80°C gemischt werden und im Fall der Anwesenheit von Treibmitteln (j) nach Einbringung der Komponenten das Formwerkzeug geschlossen wird und nach Aushärtung das Formteil entformt wird.

## Claims

1. Process for producing polyurethane elastomers, **characterised in that**
(a) organic diisocyanates and/or polyisocyanates are reacted with
(b) at least one polyether polyol having a number-average molecular weight of 800 g/mol to 25,000 g/mol and having an average functionality of 1.6 to 2.4,
(c) optionally other polyether polyols differing from b) and having a number-average molecular weight of 800 g/mol to 25,000 g/mol and having average functionalities of 2.4 to 8,
(d) optionally polymer polyols containing 1 to 50 wt.%, preferably 1 to 45 wt.% filler, based on polymer polyol, and having hydroxyl values of 10 to 149 and average functionalities of 1.8 to 8,
(e) optionally low-molecular-weight chain extenders having average functionalities of 1.8 to 2.1 and having molecular weights of 750 g/mol and lower, and/or crosslinking agents having average functionalities of 3 to 4 and having molecular weights of up to 750 g/mol, in the presence of
(f) amine catalysts and a catalyst mixture consisting of
(g) at least one organic titanium and/or zirconium compound
(h) and at least one organic lithium carboxylate
(i) and optionally additionally at least one organic bismuth carboxylate,
(j) optionally blowing agents and
(k) optionally additives,
wherein the ratio of the amount of substance n_{Ti} of titanium ions and/or n_{Zr} of zirconium ions in component g) to the amount of substance n_{Li} of lithium ions in component h) is 0.2 to 4 and if component i) is used the ratio of the amount of substance n_{Bi} of bismuth ions in component i) to the sum of the amounts of substance n_{Ti} and/or n_{Zr} and n_{Li} is 0.0001 to 0.53.

2. Process according to claim 1, **characterised in that** the catalyst mixture is used in a quantity of 0.001 to 10 wt.%, preferably 0.01 to 0.4 wt.%, based on the total quantity of compounds b) to k).

3. Process according to claim 1 or 2, **characterised in that** components g), h) and i) are used as the catalyst mixture.

4. Process according to claim 1 or 2, **characterised in that** components g) and h) are used as the catalyst mixture.

5. Process according to one or more of claims 1 to 4, **characterised in that** a prepolymer consisting of i) 4,4'-diphenylmethane diisocyanate and/or 4,4'-diphenylmethane diisocyanate modified by carbodiimidisation and ii) one or more polyether polyols having a hydroxyl value of 10 to 112, optionally with polyethylene glycols or polypropylene glycols having molecular weights of 135 g/mol to 700 g/mol, is used as component a).

6. Process for producing elastomeric moulded parts, **characterised in that**
i) the components (a) to (k) used according to claim 1 are homogeneously mixed, wherein the ratio of the amount of substance n_{Ti} of titanium ions and/or n_{Zr} of zirconium ions in component g) to the amount of substance n_{Li} of lithium ions in component h) is 0.2 to 4 and if component i) is used the ratio of the amount of substance n_{Bi} of bismuth ions in component i) to the sum of the amounts of substance n_{Ti} and/or n_{Zr} and n_{Li} is 0.0001 to 0.53,
ii) the reaction mixture from (i) is introduced into a mould and cured, wherein in the absence of blowing agents (j), the components are mixed at a temperature of 20 to 80°C and in the presence of blowing agents (j), after introduction of the components the mould is closed and the moulded part is demoulded after curing.

## Revendications

1. Procédé pour la préparation d'élastomères de polyuréthannes **caractérisé en ce que** l'on fait réagir
(a) des di- et/ou poly-isocyanates organiques avec
(b) au moins un polyéther-polyol ayant un poids moléculaire moyen, moyenne en nombre, de 800 g/mol à 25 000 g/mol et une fonctionnalité moyenne de 1,6 à 2,4,
(c) le cas échéant d'autres polyéther-polyols, différents de (b), à un poids moléculaire moyen, moyenne en nombre, de 800 g/mol à 25 000 g/mol et une fonctionnalité moyenne de 2,4 à 8,
(d) le cas échéant des polyols polymères contenant 1 à 50 %, de préférence 1 à 45 % de leur poids d'une matière de charge, et ayant des indices d'OH de 10 à 149 et des fonctionnalités moyennes de 1,8 à 8,
(e) le cas échéant des agents d'allongement des chaînes à bas poids moléculaire ayant des fonctionnalités moyennes de 1,8 à 2,1 et des poids moléculaires de 750 g/mol et au-dessous et/ou des agents réticulants ayant des fonctionnalités moyennes de 3 à 4 et des poids moléculaires allant jusqu'à 750 g/mol, en présence de
(f) des catalyseurs du type amine et un mélange catalytique consistant en
(g) au moins un dérivé organique du titane et/ou du zirconium,
(h) et au moins un carboxylate organique de lithium,
(i) et le cas échéant encore au moins un carboxylate organique de bismuth,
(j) le cas échéant des agents porogènes et
(k) le cas échéant des additifs,
le rapport de la quantité de substance n_{Ti} des ions titane et/ou n_{Zr} des ions zirconium du composant g) à la quantité de substance n_{Li} des ions lithium du composant h) allant de 0,2 à 4 et, dans le cas où l'on utilise le composant i), le rapport de la quantité de substance n_{Bi} des ions bismuth du composant i) à la somme des quantités de substance n_{Ti} et/ou n_{Zr} et n_{Li} va de 0,0001 à 0,53.

2. Procédé selon la revendication 1, **caractérisé en ce que** le mélange catalytique est utilisé en quantité de 0,001 à 10 %, de préférence de 0,01 à 0,4 % du poids total des composés b) à k).

3. Procédé selon la revendication 1 ou 2, **caractérisé en ce que** l'on utilise un mélange catalyseur constitué des composants g), h) et i).

4. Procédé selon la revendication 1 ou 2, **caractérisé en ce que** l'on utilise un mélange catalyseur constitué des composants g) et h).

5. Procédé selon une ou plusieurs des revendications 1 à 4, **caractérisé en ce que** l'on utilise en tant que composant a) un prépolymère de i) le 4,4'-diphénylméthanediisocyanate et/ou un 4,4'-diphénylméthanediisocyanate modifié par carbodiimidation et ii) un ou plusieurs polyéther-polyols ayant un indice d'OH de 10 à 112, le cas échéant avec des polyéthylène-glycols ou polypropylène-glycols ayant des masses moléculaires de 135 g/mol à 700 g/mol.

6. Procédé pour la fabrication de pièces moulées élastomères, **caractérisé en ce que**
i) on forme un mélange homogène des composants (a) à (k) de la revendication 1, le rapport de la quantité de substance n_{Ti} des ions titane et/ou n_{Zr} des ions zirconium du composant g) à la quantité de substance n_{Li} des ions lithium du composant h) allant de 0,2 à 4 et, dans le cas où on utilise le composant i), le rapport de la quantité de substance n_{Bi} des ions bismuth du composant i) à la somme des quantités de substance n_{Ti} et/ou n_{Zr} et n_{Li} va de 0,0001 à 0,53,
ii) on introduit le mélange de réaction obtenu en (i) dans un outil de moulage et on durcit, le mélange étant réalisé à une température de 20 à 80°C en l'absence d'agent porogène (j) et, en présence d'agent porogène (j), après introduction des composants on ferme l'outil de moulage et, après durcissement, on démoule la pièce.
